## Europäisches Patentamt
## European Patent Office
## Office européen des brevets

(19)

(11) Publication number: **0 194 796**
**B1**

(12)

# EUROPEAN PATENT SPECIFICATION

(45) Date of publication of the patent specification:
**24.08.88**

(51) Int. Cl.⁴: **C 09 K  3/10, C 08 K  3/30**

(21) Application number: **86301520.2**

(22) Date of filing: **04.03.86**

(54) Sealing compositions.

(30) Priority: **05.03.85  GB 8505677**

(43) Date of publication of application:
**17.09.86 Bulletin 86/38**

(45) Publication of the grant of the patent:
**24.08.88 Bulletin 88/34**

(84) Designated Contracting States:
**BE DE FR GB IT NL SE**

(56) References cited:
**FR - A - 1 425 357**
**FR - A - 2 013 489**
**US - A - 3 297 601**
**US - A - 4 061 613**

(73) Proprietor: **W.R. GRACE & CO., Grace Plaza 1114 Avenue of the Americas, New York New York 10036 (US)**

(72) Inventor: **Johnson, Terence Richard, 37 Caldecote Road, Eynesbury, St. Neots, Huntingdon, Cambridgeshire (GB)**
Inventor: **Martin, Timothy John, Timbers, 5 The Orchard, Manor Way, Aldwick Bay, Bognor Regis, Sussex (GB)**

(74) Representative: **Lawrence, Peter Robin Broughton et al, GILL JENNINGS & EVERY 53-64 Chancery Lane, London WC2A 1HN (GB)**

ACTORUM AG

## Description

Seals, especially to serve as gaskets in container closures, may be formed by converting to a solid resilient mass an aqueuos dispersion containing elastomeric polymer optionally with fillers, pigments and other additives. Generally the conversion to the solid state necessitates the evaporation of rather large amounts of water and in practice this generally necessitates heating the aqueous dispersion after it has been deposited in the location where it is to serve as a seal. For instance the dispersion may be deposited in liquid form as a gasket on a container closure and may then be dried to solidify the composition on the closure. This drying can require large amounts of heat energy and/or large apparatus.

If the closure is a drum end it may immediately be fixed to the drum and the whole drum may then be heated to dry the composition. If the closure is a drum cover or a can end the cover or the end may be heated to dry the composition before being fixed to the drum or can. Both these methods require large ovens as it is necessary to heat the relatively large mass of metal in the drum cover or can end in order to dry the composition.

It would be desirable to be able to dry aqueous compositions for drum covers, drum ends, container lids, caps and other container closures without having a special heating step.

Plaster and cement compositions containing elastomeric polymers are known. For istance GB 1 092 381 discloses that the addition of an aqueous dispersion of a natural or synthetic elastomer to a gypsum plaster composition that is to be used in lining walls in buildings increases the knock resistance and decreases the liability of the plaster to crack.

In GB 1 317 603 resilient compositions comprising a latex of an elastomeric polymer and a solid coagulant, as a dispersion in a hydrophobic organic liquid are used primarily in the manufacture of sheet or other shaped articles by casting or moulding, but their use as gap-filling sealants is also mentioned. The coagulant is generally cement but Plaster of Paris is mentioned.

In GB 1 325 544 preformed sheet structures are made from compositions comprising calcium sulphate plasters (that can be hemihydrate or anhydrite) and an aqueous latex of an elastomeric material and a plasticiser, generally for use in construction. The compositions may also be used as well as the similar compositions according to US-A-3 297 601 as sealants for joints or cracks, generally for building structures. The liquid compositions contain a stabiliser and may also contain an accelerator or an inhibitor for the water absorbing reaction of the plaster.

GB 1 400 424 discloses compositions for use in making preformed structures for building, putty-like sealing compositions or surface coatings and that comprise a continuous phase that is a plasticiser in which is dispersed a desiccant and an aqueous polymeric emulsion. The compositions contain a stabiliser to prolong working life examples being gum arabic and surfactants. When the desiccant is a plaster they may include an accelerator.

None of these compositions would be suitable for container sealing purposes, e.g. because of viscosity and rheology properties and poor solvent resistance and because the ingredients, e.g. plasticiser and choice of polymer, would for toxicological reasons be banned from use in food and beverage containers. None of the methods that are described could permit satisfactory lining of the composition on a container end and then drying of the composition.

It is well accepted that seals such as container gaskets must be resilient and so any dried gasket that is not resilient would inevitably be rejected by the user as being inappropriate for use.

The invention is based on the surprising discovery that certain liquid masses containing elastomer can be solidified to a crumbly mass, that is, a generally solid mass lacking cohesive trength so that it can easily be broken into pieces, with less heating than is conventionally required to dry a water-based gasketting material and this crumbly mass can then very easily be converted to a rubbery mass that can serve as a container gasket or other sealant.

According to the invention a rubbery mass is made by a method comprising forming a fluid mass comprising an aqueous dispersion of a visco elastic polymer and calcium sulphate hemihydrate or anhydrite, allowing the calcium sulphate to hydrate within the mass to convert the mass to a crumbly solid mass, and thereafter converting the crumbly mass to a rubbery mass by heating or by mechanically working the crumbly mass.

The invention is of particular value when the mass is to serve as a gasket for a container closure, especially a drum closure such as a drum end or drum cover or a container lid or cap, and in particular the invention includes a container closure lined with a crumbly solid mass that is in the form of a gasket and that becomes rubbery on heating or mechanical working, wherein the crumbly mass has been obtained by applying to the closure a fluid mass comprising an aqueous dispersion of a visco elastic polymer and calcium sulphate hemihydrate or anhydrite and allowing the calcium sulphate to hydrate within the mass to convert the mass to a crumbly mass.

Despite the fact that the resultant gasket is a crumbly solid, and would therefore normally be rejected as wholly unsuitable for forming an effective seal between a container closure and container body, in the invention this mass can be converted to a suitable state, often during the application of the closure to the body.

The effect appears to be unique to calcium sulphate, which is preferably introduced as the hemihydrate, and so the invention is entirely different from the numeros prior art processes in which water in a fluid mass is merely absorbed by a material capable of absorbing large amounts of water, for instance the silica gel or calcium chloride exemplified in GB 1 400 424.

Although we do not wish to be bound by theory it appears probable that the calcium sulphate hemihydrate or anhydrite becomes hydrated as a result of reaction with water within the fluid mass to form a network of crystals of a calcium sulphate hydrate, presumably the calcium sulphate dihydrate. These crystals render the mass crumbly and a very stiff or even rigid solid and cause it to appear to be wholly unsuitable for use us a sealant. However heating and/or mechanical working of the mass apparently destroys the network or crystals and converts it to a rubbery form which will then give an excellent seal. If this conversion is being brought about by heating, the amount that is required is much less than the amount that would be required for drying the mass in the absence of the calcium sulphate hemihydrate or anhydrite.

The fluid mass can be formed by combining calcium sulphate hemihydrate or anhydrite with an aqueous dispersion of a polymer and substancially immediately depositing it in the desired location, before significant hydration has occurred. Preferably however the fluid mass is formed by combining, immediately prior to use, (a) a stable aqueous dispersion of the polymer, the calcium sulphate hemihydrate or anhydrite and a hydration inhibitor with (b) a hydration activator.

The fluid mass has a continuous aqueous phase in which the polymer is dispersed. Preferably it is made by blending a polymer latex with the other components desired in the mass by conventional blending or mixing processes. The latex may be a naturally occurring polymer latex or it may be an emulsion of a synthetic polymer in water, for instance it may be made by emulsion polymerisation. Alternatively solid polymer may be milled into water and the other components of the fluid mass added before, during and/or after milling, in known manner.

The polymer content of the dispersion is generally in the range 50% to 75% by weight of the total latex. The water content of the latex is typically 25 to 150, preferably 50 to 100, parts by weight based on 100 parts by weight polymer (phr).

The polymer is of a type used in conventional gaskets for container closures. Thus it shows visco elastic properties. The polymer is generally elastomeric and is preferably a rubbery polymer, although it may be of a type not generally described as elastomeric, such as plasticised poly vinyl chloride or styrene acrylic ester copolymer. It may be synthetic or natural.

Suitable synthetic polymers include butyl rubber, polychloroprene, butadiene-acrylonitrile copolymer, acrylonitrile-butadiene-styrene terpolymer polybutadiene, polyvinylidene chloride homopolymer, polyvinylidene chloride copolymers, plasticised polyvinyl chloride, polyvinylchloride copolymers, plasticised polyvinyl propionate, polyvinyl propionate copolymers, polyacrylic acid copolymers, polymethacrylic acid copolymers, plasticised polystyrene, styrene acrylic ester copolymers, carboxylated styrene acrylic ester copolymers and, prefeably, styrene-butadiene rubbers and carboxylated styrene-butadiene copolymers. Blends may be used. Natural rubber latices are, however, found to be particulary suitable in processes according to the invention.

The polymers are preferably vulcanisable. The compositions may be prepared with a pre-vulcanised latex or with an unvulcanised latex together with a suitable vulcanising system. Suitable vulcanising systems comprise sulphur, zinc dibutyl dithiocarbonate and zinc oxide. The total amount of vulcanising system is generally in the range 0.2 to 5 phr. The amount of each of the named components is typically in the range 0.1 to 1 phr, for instance the amount of each component my be, respectively, 0.3, 0.4 and 0.3 phr.

The calcium sulphate anhydrite or heminhydrate must be present in an amount sufficient to react with and absorb enough water to convert the fluid mass to a crumbly solid. Best results are generally obtained using heminhydrate. The amount of calcium sulphate heminhydrate (or anhydrite) is usually at least 50 and preferably at least 100 phr. The amount is usually below 300, and preferably below 200 phr. The amount will depend in part on the amount of water in the fluid mass and must be sufficient to react with sufficient of the water to form the desired crumbly solid structure. Usually at least 20%, typically 25 to 50% and most usually around 35% of the total water reacts with the calcium sulphate.

A valuable side reaction of the hydration is that calcium ions are released into the fluid mass and these cause gelation of the mass and this gelation assists in the formation of the solid structure of the mass, even though some free water remains in the mass.

The calcium sulphate serves as a filler but additional fillers and/or pigments may also be incorporated. The preferred additional filler is clay, such as kaolin clay, but other fillers include colloidal silica and other siliceous fillers, synthetic silicate, calcium carbonate or sulphate, aluminium hydroxide, talc, dolomite, aluminium or barium sulphate, zinc oxide, or magnesium oxide or carbonate or silicate. Pigmentary fillers are, for instance titanium dioxide, carbon black or iron oxide. Such fillers may have been surface treated, for instance in conventional manner. The total of calcium sulphate and additional filler and pigment is generally 100 to 300 phr and preferably less than 250 phr.

Instead of modifying the colour of the composition by including particulate pigment some other colouring material, for instance a soluble dye, may be included.

The compositions may include tackifying resins. Suitable materials are well known and are generally selected from synthetic hydrocarbon or petroleum resins, polyterpene resins, phenolic resin modified with natural resins such as rosin or terpene, xylene formaldehyde resin and modified products thereof, and esterified rosins or other rosin type resins such as rosin, hydrogenated rosin, polymerised rosin or hardened rosin, the amount of tackifier is generally up to 200 phr and preferably up to 100 phr, e.g. 5 to phr.

The composition will generally contain a stabiliser for stabilising the dispersion. This stabiliser may be selected from any of the materials conventionally used for stabilising sealing compositions based on filled polymer latices. Such stabilisers include styrene maleic anhydride copolymers or other styrene copolymers, methyl cellulose, polyacrylamide, ethoxylate condensates, alkyl phenol ethoxylates, polyvinyl pyrolidone, ammonium oleate, ammonium and alkali metal salts of rosin acid or fatty acids, and casein. Such stabilisers may be used in admixture, for instance with other materials.

The compositions may include minor amounts, e.g. up to 1% or at most up to 5% of other additives that are known to those skilled in the art and that are conventional in filled latex sealing compositions, such as viscosity increasing agents (for instance ammonium alginate, hydroxypropyl ethyl cellulose, methyl cellulose, carboxy methyl cellulose, high molecular weight polyacrylic acid, gum karaya or bentonite), bactericides, corrosion inhibitors, plasticisers, surfactants, antioxidants (for instance phenolic or amino antioxidants) and pH adjusters (for instance ammonia, primary amine, sodium hydroxide or sodium carbonate).

The fluid characteristics of the initial composition must permit their application at the point of use, e.g., as container sealing compositions. The total solids content of the compositions is usually in the range 40 to 90% by weight of the total range of the composition and is preferably in the range 70% to 85%. The compositions generally have a viscosity below 20 000 mPas and preferably in the range 2 000 to 10 000 mPas.

When the aqueous dispersion is stabilised against premature hydration by the incorporation of a hydration inhibitor any of the known inhibitors for the reaction of gypsum plaster may be used. Known examples that are suitable for use in the invention include borax, citrates, polyacrylic acid, phosphates or proteins, preferably casein. The inhibitor is present in an amount which renders the composition containing the acqueous latex and the desiccant stable on storage, typically 0.1 to 20, preferably 0.5 to 15 phr and most preferably 3 to 7 phr.

To cause solidification of the aqueous dispersion containing the inhibitor it is necessary to mix it with a hydration activator, namely one of the materials that will cause the hydration reaction to occur despite the initial presence of the inhibitor. Any material that will overcome the effect of the inhibitor may be used. Examples of known suitable activators are potassium, sodium, aluminium, zinc and ammonium sulphates, sulphuric acid and aluminium nitrate. The amount of activator is sufficient to initiate the reaction but it is necessary that the composition remains workable for sufficiently long for deposition on to the closure to be carried out. Preferably the hydration reaction proceeds to the point where the fluid mass becomes essentially solid in a period of between 30 seconds and 15 minutes, normally between 1 and 5 minutes, and generally preferably 1 to 3 minutes. The amount of activator typically is 1 to 30, preferably 3 to 15, phr.

When the mass is to be lined on to a container closure the activator should be added to the composition containing the calcium sulphate and the polymer at any point of the lining operation, that is before, during or after lining, but preferably during lining using a two component mixing applicator. This may be achieved by applying a composition comprising all of the calcium sulphate, the inhibitor and some or all of the polymer through one feed of a two-feed mixing device and applying another composition containing the activator in a carrier, through the second feed of the two-feed mixing device. The composition containing the activator in a carrier may be a solution of the activator in water and may comprise some of the other ingredients desired in the final composition. Substantially immediately after the two feeds are mixed the resultant mixture is deposited on to the closure and allowed to set.

The solid mass is crumbly in that if a piece is removed from the container closure it can easily be crumbled, e.g., by gentle pulling or rubbing between the fingers. It is preferably a rigid, often brittle, solid but can be stiff paste. It is necessary to convert it to a rubbery mass, i.e., a mass having a texture typical of sealing gaskets, and this is achieved by heating or mechanically working the mass. The act of sealing the closure on to a drum or other container may provide sufficient working, due to the shear and other forces applied during the sealing operation but generally it is desirable to heat the mass either prior to, during or after applying the closure to the container body. Heating at temperatures of 90 to 200°C, preferably 100 to 150°C, for 2 to 60 minutes, preferably 5 to 30 minutes, is generally suitable.

The container and/or the closure may be previously or subsequently coated by, for instance, a lacquer, paint or other protective coating by conventional means. Such a coating generally requires heating to effect curing or drying of it and the heating required for this will usually be sufficient to convert the crumbly mass to a rubbery mass. It the mass is vulcanisable then the vulcanisation reaction may also be carried out during the heating step.

The closure may be fitted on to the container immediately after deposition of the crumbly mass on it or it may be stored and used at a subsequent time. The crumbly mass is generally converted to its rubbery form at the time of use. The invention is of particular value when the container is a drum and the closure is a drum end or drum closure but can also be used in other container closures, such as lids and caps. The closure may be made of conventional materials such as metal or plastic. The crumbly mass is often converted to the rubbery form at the time of fitting the closure to the container, for exemple during the operation of sealing a drum end in to a drum or of closing a drum cover on to a drum or a lid or cap on to a container.

Although the invention is of particular value in container closures it can also be used in any other environment where a rubbery mass of a visco elastic polymer filled with calcium sulphate is required. For instance it can be used as a pipe, crack or other sealant, that may be mechanically worked or heated in order to render it resilient, or it can be formed as a layer, for instance by spreading the fluid mass on a surface, permitting it to become rigid and then rolling or otherwise working the layer to render it flexible. Usually the fluid mass is deposited at the place where it is to be used but it can be deposited on a surface, converted to a crumbly mass on that surface, worked or heated on or off that surface, and then used at a different location, e.g., as a flexible rubbery sheet material.

The invention is further illustrated in the following examples.

*Example 1*

167 parts by weight of a natural rubber latex containing 100 parts by weight of polymer is mixed with 6.7 phr stabiliser in 6.7 phr water and 1.6 phr of borax as an inhibitor. To the latex is added 158 phr of a gypsum plaster and the mixture formed into a smoth paste. To the paste is added 13.7 phr of a 50% solution of aluminium sulphate in water as an accelerator and the mixture immediately lined into a drum cover. After 1 minute at room temperature the composition appeared as a crumbly mass which will develop rubbery properties if subject to stress or if heated to, for example, 116°C for 20 minutes.

*Example 2*

161.8 parts by weight of a natural rubber latex containing 100 parts by weight of polymer is mixed with 6.7 phr of alkyl phenol ethoxylate stabilisier and 5.0 phr of casein as a hydration inhibitor in 6.7 phr of water and 0.5 phr of ammonia solution.

To the latex mixture is added 1 phr of a polyphosphate corrosion inhibitor and an aqueous semifinish containing 0.19 phr of sodium o-phenylphenate bactericide, 0.23 phr naphthalene sulfonic acid wetting agent, 0.25 phr of sulphur vulcanising agent, 0.38 phr of zinc dibutyl dithiocarbamate vulcanisation accelerator, 0.26 phr of zinc oxide activator, 2.04 phr of phenolic antioxidant and 1.98 phr of red iron oxide pigment stabilised by 1.50 phr of oleyl alcohol polyglycol ether. To the mixture is added 180.0 phr of gypsum plaster and the mixture formed into a fluid dispersion. This dispersion is mixed in a suitable two-component applicator with an activator consisting of a 50% by weight aqueous solution of aluminium sulphate hexadecahydrate in the ratio of 20 parts of despersion to 1 part of activator and lined on to a drum end. After 2 minutes at room temperature, the lined gasket becomes stiff and rigid, lacking cohesive strength, and will develop rubbery properties if subjected to mechanical stress or if heated to, for example, 116°C for 20 minutes.

Preferably the drum may be coated with a heat curable lacquer and after applying the drum end to the drum the assembly is subjected to the described heating, thereby converting the gasket to a rubbery gasket and causing curing of the lacquer.

*Example 3*

167 parts by weight of a prevulcanised natural rubber latex containing 100 parts by weight of polymer is mixed with 6.7 phr of alkyl phenol ethoxylate stabiliser and 5.0 phr of casein as a hydration inhibitor in 6.7 phr of water and 0.5 of ammonia solution. To the mixture is added 180.0 phr of gypsum plaster and the mixture formed into a fluid dispersion. This dispersion is mixed in a suitable two component applicator with an activator consisting of a 50% by weight aqueous solution of aluminium sulphate hexadecahydrate in the ratio of 20 parts of dispersion to 1 part of activator and lined on to a drum end. After 2 minutes at room temperature, the lined gasket forms a stiff, rigid, crumbly mass lacking cohesive strength which will develop rubbery properties if heated to, for example, 125°C for 5 minutes.

**Claims**

1. A method of making a rubbery mass comprising forming a fluid mass comprising an aqueous dispersion of a visco elastic polymer with calcium sulphate hemihydrate or anhydrite, allowing the calcium sulphate to hydrate within the mass to convert the mass to a crumbly solid mass and converting the crumbly mass to a rubbery mass by heating and/or mechanically working the mass.

2. A method according to claim 1 in which calcium sulphate heminhydrate is used and is present in an amount of from 50 to 300 parts by weight based on 100 parts by weight polymer.

3. A method according to claim 1 or claim 2 in which the polymer is a natural rubber latex or a latex of a synthetic rubbery polymer.

4. A method according to any preceding claim in which the fluid mass includes additional filler in an amount such that the total amount of calcium sulphate and filler is 100 to 300 parts by weight based on 100 parts by weight polymer.

5. A method according to any preceding claim in which the fluid mass is formed by combining (a) a stable aqueous dispersion of the elastomer , the calcium sulphate, and a hydration inhibitor with (b) a hydration activator.

6. A method according to claim 5 in which the inhibitor is selected from borax, phosphate, polyacrylic acids, citrates and proteins, preferably casein.

7. A method according to claim 5 in which the activator is selected from potassium, sodium, aluminium, zinc and ammonium sulphates, sulphuric acid and aluminium nitrate, preferably aluminium sulphate.

8. A method according to any preceding claim in which the rigid mass is converted to a resilient mass by heating at 90 to 200°C for 2 to 60 minutes, preferably 100 to 150°C for 5 to 30 minutes.

9. A method according to any preceding claim in which the resilient mass is a container gasket and is made by lining a container closure with the fluid mass, allowing it to harden, converting it to a rubbery mass by mechanical working or heating and applying the closure to a container body before, during or after the conversion, with the mass as a gasket between the closure and the body.

10. A method according to claim 9 in which the conversion is effected by heating the body and the heating also dries or cures a protective coating on the body or closure.

11. A method according to claim 10 or claim 11 in which the container is a drum.

12. A container closure lined with a crumbly solid mass that is in the form of a gasket and that becomes rubbery on heating or mechanical working, wherein the crumbly mass has been obtained by applying to the closure a fluid mass comprising an aqueous dispersion of a visco elastic polymer and calcium sulphate hemihydrate or anhydrite and allowing the calcium sulphate to hydrate within the mass to convert the mass to a crumbly solid mass.

Patentansprüche

1. Verfahren zur Herstellung einer kautschukartigen Masse, welches die Bildung einer fliessenden Masse, die eine wässrige Dispersion eines viskoelastischen Polymers mit Calciumsulfat-Halbhydrat oder Anhydrit enthält, das Hydratisierenlassen des Calciumsulfats innerhalb der Masse, um die Masse in eine krümelig feste Masse umzuwandeln, und das Umwandeln der krümeligen Masse in eine kautschukartige Masse durch Erwärmen und/oder mechanisches Bearbeiten der Masse umfasst.

2. Verfahren nach Anspruch 1, in dem Calciumsulfat-Halbhydrat verwendet wird und in einer Menge von 50 bis 300 Gewichsteilen bezogen auf 100 Gewichsteile des Polymers vorliegt.

3. Verfahren nach Anspruch 1 oder 2, in dem das Polymer ein natürlicher Kautschuklatex oder ein Latex eines synthetischen kautschukartigen Polymers ist.

4. Verfahren nach einem der vorangehenden Ansprüche, in dem die fliessende Masse zusätzlichen Füllstoff in einer solchen Menge enthält, dass die Gesamtmenge Calciumsulfat und Füllstoff 100 bis 300 Gewichsteile bezogen auf 100 Gewichsteile des Polymers beträgt.

5. Verfahren nach einem der vorangehenden Ansprüche, in dem die fliessende Masse durch Mischen (a) einer stabilen wässrigen Dispersion des Elastomers, des Calciumsulfats und eines Hydratisierungsinhibitors mit (b) einem Hydratisierungsaktivator gebildet wird.

6. Verfahren nach Anspruch 5, in dem der Inhibitor aus Borax, Phosphat, Polyacrylsäuren, Zitraten und Proteinen, bevorzugt Casein, ausgewählt ist.

7. Verfahren nach Anspruch 5, in dem der Aktivator aus Kalium-, Aluminium-, Zink- und Ammoniumsulfaten, Schwefelsäure und Aluminiumnitrat, bevorzugt Aluminiumsulfat, ausgewählt ist.

8. Verfahren nach einem der vorangehenden Ansprüche, in dem die starre Masse durch 2 bis 60 Minuten langes Erwärmen auf 90 bis 200°C, vorzugsweise 5 bis 30 Minuten langes Erwärmen auf 100 bis 150°C in eine elastische Masse umgewandelt wird.

9. Verfahren nach einem der vorangehenden Ansprüche, in dem die elastische Masse eine Behälterdichtung ist und hergestellt wird durch Auskleiden eines Behälterverschlusses mit der fliessenden Masse, Aushärtenlassen der Masse, Umwandlung dieser in eine kautschukartige Masse durch mechanische Bearbeitung oder Erwärmen und Aufbringen des Verschlusses auf einen Behälterkörper vor, während oder nach der Umwandlung, wobei die Masse als Dichtung zwischen dem Verschluss und dem Körper dient.

10. Verfahren nach Anspruch 9, in dem die Umwandlung durch Erwärmen des Körpers bewirkt wird und das Erwärmen ebenfalls einen schützenden Überzug auf dem Körper oder dem Verschluss trocknet oder härtet.

11. Verfahren nach Anspruch 10 oder 11, in dem der Behälter eine Trommel ist.

12. Behälterverschluss, der mit einer krümeligen festen Masse ausgekleidet ist, welche sich in Form einer Dichtung befindet und beim Erwärmen oder mechanischen Bearbeiten kautschukartig wird, wobei die krümelige Masse dadurch erhalten wird, dass eine fliessende Masse, die eine wässrige Dispersion eines viskoelastischen Polymers und Calciumsulfat-Halbhydrat oder Anhydrit enthält, auf den Verschluss aufgetragen wird und das Calciumsulfat innerhalb der Masse hydratisieren gelassen wird, um die Masse in eine krümlige feste Masse umzuwandeln.

## Revendications

1. Procédé d'obtention d'une masse caoutchouteuse comprenant la formation d'une masse fluide comprenant une dispersion aqueuse d'un polymère visco-élastique et d'hémihydrate de sulfate de calcium ou d'anhydrite, l'hydratation du sulfate de calcium dans la masse pour transformer la masse en une masse solide friable, puis la transformation de la masse friable en une masse caoutchouteuse par chauffage et/ou par traitement mécanique de la masse.

2. Procédé selon la revendication 1, dans lequel l'hémihydrate de sulfate de calcium est utilisé et est présent en une quantité de 50 à 300 parties en poids sur la base de 100 parties en poids de polymere.

3. Procédé selon la revendication 1 ou la revendication 2, dans lequel le polymère est un latex de caoutchouc naturel ou un latex d'un polymère caoutchouteux synthétique.

4. Procédé selon l'une des revendications précédentes dans lequel la masse fluide comprend une charge additionnelle en une quantité telle que la quantité totale de sulfate de calcium et de charge soit de 100 à 300 parties en poids sur le base de 100 parties en poids de polymere.

5. Procédé selon l'une des revendications précédentes dans lequel la masse fluide est formée en combinant (a) une dispersion aqueuse stable de l'élastomère, le sulfate de calcium, et un inhibiteur d'hydratation avec (b) un activateur d'hydratation.

6. Procédé selon la revendication 5, dans lequel d'inhibiteur est choisi parmi le borax, le phosphate, les acides polyacryliques, les citrates et les protéines, de préférence la caséine.

7. Procédé selon la revendication 5, dans lequel l'activateur est choisi parmi les sulfates de potassium, de sodium, d'aluminium, de zinc et d'ammonium, l'acide sulfurique et le nitrate d'aluminium, de préférence le sulfate d'aluminium.

8. Procédé selon l'une des revendications précédentes dans lequel la masse rigide est transformée en une masse élastique par chauffage à 90 à 200°C pendant 2 à 60 minutes de préférence 100 à 150°C pendant 5 à 30 minutes.

9. Procédé selon l'une des revendications précédentes, dans lequel la masse élastique est un joint d'étanchéité pour récipient et est obtenue en recouvrant une fermeture de récipient avec la masse fluide, en la laissant durcir, en la transformant en une masse caoutchouteuse par traitement mécanique ou par chauffage et en appliquant la fermeture à un corps de récipient avant, pendant, ou après la transformation, la masse sous forme de joint d'étanchéité se trouvant entre la fermeture et le corps.

10. Procédé selon la revendication 9, dans lequel la transformation est effectuée en chauffant le corps et selon lequel le chauffage sèche ou durcit également un revêtement protecteur sur le corps ou sur la fermeture.

11

12

11. Procédé selon la revendication 10 ou la revendication 11, dans lequel le récipient est un tambour.

12. Fermeture de récipient revêtue d'une masse solide friable qui est sous forme d'un joint d'étanchéité et qui devient coauchouteuse par chauffage ou par traitement mécanique, dans laquelle la masse friable a été obtenue par application à la fermeture d'une masse fluide comprenant une dispersion aqueuse d'un polymère visco-élastique et d'hémihydrate de sulfate de calcium ou d'anhydrite et par hydratation du sulfate de calcium dans la masse pour transformer la masse en une masse solide friable.